(19) Europäisches Patentamt
European Patent Office
Office européen des brevets

(11) **EP 3 374 439 B1**

(12) **FASCICULE DE BREVET EUROPEEN**

(45) Date de publication et mention
de la délivrance du brevet:
**11.12.2019 Bulletin 2019/50**

(21) Numéro de dépôt: **16809933.1**

(22) Date de dépôt: **25.10.2016**

(51) Int Cl.:
*C09D 5/02* *(2006.01)*          *C08F 265/06* *(2006.01)*
*C09D 151/00* *(2006.01)*      *C08F 220/18* *(2006.01)*
*C08F 212/08* *(2006.01)*      *C08F 220/40* *(2006.01)*
*C08F 220/06* *(2006.01)*      *C08F 2/24* *(2006.01)*

(86) Numéro de dépôt international:
**PCT/FR2016/052773**

(87) Numéro de publication internationale:
**WO 2017/081384 (18.05.2017 Gazette 2017/20)**

(54) **REVETEMENTS AYANT UNE RESISTANCE AMELIOREE AUX TACHES ET SALISSURES**

BESCHICHTUNGEN MIT EINER VERBESSERTEN FLECK- UND SCHMUTZ- BESTÄNDIGKEIT

COATINGS HAVING AN IMPROVED STAIN AND DIRT RESISTANCE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.11.2015 FR 1560749**

(43) Date de publication de la demande:
**19.09.2018 Bulletin 2018/38**

(73) Titulaire: **Arkema France
92700 Colombes (FR)**

(72) Inventeurs:
• **BOONE, Alain
60140 Verderonne (FR)**

• **MAZAJCZYK, Jérôme
60610 La Croix Saint Ouen (FR)**
• **DELMAS, Grégory
60300 Senlis (FR)**
• **CHAMBAT, Claire
69530 Orlienas (FR)**

(74) Mandataire: **Killis, Andréas
ARKEMA France
Département Propriété Industrielle
420, rue d'Estienne d'Orves
92705 Colombes Cedex (FR)**

(56) Documents cités:
WO-A1-97/12921          WO-A1-2012/084974
FR-A1- 2 769 317          US-A1- 2005 107 527
US-A1- 2007 208 129

## Description

L'invention concerne une composition aqueuse de revêtement comprenant comme liant spécifique une dispersion aqueuse de polymère dont la composition et la structure permettent d'obtenir des revêtements décoratifs présentant une résistance aux taches améliorée et à moindre coût par rapport aux solutions connues de l'état de la technique. L'invention concerne également la dispersion de polymère liant spécifique de la composition de revêtement, son procédé d'obtention et les utilisations de ladite dispersion comme liant et de ladite composition de revêtement la comprenant.

Plus particulièrement, l'invention porte sur des revêtements à base de polymères présentant des propriétés barrière limitant la modification de la coloration des revêtements au contact de produits tachant ou salissants et protégeant ainsi des substrats divers des taches et salissures, en particulier domestiques avec un spectre de résistance aux taches et salissures domestiques au moins aussi large que pour des dispersions et compositions de revêtement liées connues de l'état de la technique, ces dernières nécessitant des moyens et procédés de mise en œuvre plus sophistiqués et couteux. Les revêtements concernés sont les revêtements décoratifs, comme les peintures vernis ou encres et plus particulièrement les peintures décoratives.

En particulier, une peinture de qualité doit pouvoir conserver un bel aspect de surface tout au long de son utilisation. Les revêtements extérieurs sont par exemple sujets à l'encrassement dû aux poussières, à la pollution. Les revêtements intérieurs doivent quant à eux être résistants aux taches et salissures domestiques.

Les systèmes disponibles sur le marché présentent d'excellentes propriétés de résistance aux taches, de par l'utilisation, pour le liant, de monomères de spécialité contenant du phosphore comme décrit dans EP 1 832 635 ou pour la composition du revêtement comme la peinture, d'additifs modifiant l'hydrophobie/hydrophilie de surface tels que des microcires, le PVDF (polyvinylidène fluorure) ou les silicones permettant d'atteindre d'excellents niveaux de résistance aux taches, mais avec un surcoût important par rapport à la contrainte d'utilisation de monomères fonctionnels de spécialité pour ledit liant ou pour la composition de revêtement, d'additifs ou de composants très spécifiques, par exemple des polymères fluorés associés à des organosilicates comme décrit dans WO 2006/007052.

Il y a donc besoin de s'affranchir de l'utilisation forcée de ces monomères fonctionnels de spécialité et desdits additifs très particuliers pour les compositions de revêtement en cherchant des nouveaux liants faciles à obtenir par un procédé simple, de polymérisation en émulsion radicalaire tout en visant le même excellent niveau de performances, mais sans lesdits monomères fonctionnels de spécialité dont la disponibilité est restreinte par un coût multiple par rapport aux monomères de base, tels que comportant une fonction phosphate ou phosphonique ou sans les additifs spécifiques ajoutés dans la peinture dans ce but (améliorer le niveau de performances) et donc avec un revêtement en final sans aucune limitation, ni contrainte, concernant le besoin de monomères particuliers ou d'additifs particuliers et donc, de meilleur rapport qualité/coût sans la contrainte en produits spécifiques et donc bon marché par rapport aux produits existants.

L'invention, par des choix simples de compositions monomériques et du procédé, permet d'atteindre d'excellentes performances de résistances aux taches, au moins équivalentes aux systèmes décrits par l'état de la technique et donc permettant une solution plus pratique et ceci à moindre coût que les solutions existantes.

La présente invention concerne plus particulièrement une dispersion (émulsion) de polymère dans l'eau de température minimale de formation de film (TMFF) se situant entre 0 et 50°C, la dispersion comprenant des particules obtenues en au moins deux étapes de polymérisation en émulsion, avec une phase polymère cœur P1 et une phase polymère écorce P2, dont les températures de transition vitreuse (Tg) respectives, calculées selon Fox, peuvent être différentes, de préférence identiques à plus ou moins 2°C et comprises entre -10 et + 50°C, avec des compositions différentes P1 et P2, chacune apportant au film de latex et au revêtement qui en résulte, les propriétés barrière finales requises.

La phase polymère P1 représente de 20 à 90% en poids du total P1 + P2. La phase P2 représente de 10 à 80% en poids du total P1 + P2.

De plus et de façon inattendue, le choix de cette solution permet également d'atteindre un très haut niveau de dureté et de brillant à 20°, ce qui est un avantage supplémentaire pour ce type de peinture décorative car cela permet de formuler indifféremment une peinture ou un vernis brillant, satiné ou mat.

Le premier objet de l'invention concerne une composition de revêtement comprenant le liant spécifique de composition et structure spécifique, sans monomères fonctionnels de spécialité comme phosphorés ou sulfonés et sans que ladite composition comprenne des additifs spécifiques pour améliorer la résistance aux taches et salissures.

Un autre objet de l'invention concerne l'utilisation de ladite composition de revêtement dans des applications pour revêtements décoratifs à effet de barrière.

L'invention couvre également le liant spécifique composant de ladite composition de revêtement selon l'invention et aussi un procédé spécifique de préparation.

Finalement, l'invention couvre un revêtement qui résulte de ladite composition de revêtement ou de l'utilisation dudit liant spécifique de la présente invention.

Donc, le premier objet de l'invention concerne une composition aqueuse de revêtement, laquelle comprend comme liant une dispersion aqueuse de polymère laquelle dispersion a une température minimale de formation de film (TMFF) selon ISO 2115 entre 0 et 50°C, de préférence entre 0 et 40°C et qui comprend des particules de polymère obtenues par polymérisation en émulsion radicalaire en au moins deux étapes, de préférence en deux étapes et avec lesdites particules comprenant au moins deux phases polymères P1 et P2, de préférence deux, avec le polymère de la phase P1 représentant de 75 à 90% en poids du polymère total P1 + P2 et le polymère de la phase P2 représentant de 10 à 25% en poids du polymère total P1 + P2, avec P1 ayant une température de transition vitreuse Tg1 calculée selon Fox et allant de 0 à 40°C, de préférence de 0 à 20°C et P2 ayant une température de transition vitreuse Tg2 calculée selon Fox et allant de 0 à 40°C, de préférence de 0 à 20°C et pour Tg1 et Tg2 allant de 0 à 20°C, pouvant être identiques ou différentes à $\pm$ 2°C près et avec,

- ledit polymère P1 comprenant des unités de structure issues de 4 monomères M1 à M4 suivants :

    - au moins un monomère éthyléniquement insaturé M1 choisi parmi les esters (méth)acryliques en $C_4$, de préférence esters acryliques en $C_4$, signifiant ici ester acrylique avec l'alkyl dudit ester étant en $C_4$, plus préférentiellement M1 étant l'acrylate de butyle et
    - au moins un monomère éthyléniquement insaturé M2 choisi parmi les monomères vinyl aromatiques, en particulier les vinyl toluènes et le styrène et de préférence le styrène et
    - au moins un monomère éthyléniquement insaturé M3 porteur d'un groupement acide carboxylique et
    - au moins un monomère M4 ayant une fonction d'agent réticulant interne de ladite phase P1, de préférence choisi parmi les monomères porteurs d'au moins deux insaturations éthyléniques copolymérisables avec les insaturations éthyléniques des monomères M1 à M3 ou porteurs d'une insaturation éthylénique et d'une fonction silane bloquée sous forme alcoxy-silane.

- ledit polymère P2 comprenant des unités de structure issues de 4 monomères M5 à M8 suivants :

    - au moins un monomère éthyléniquement insaturé M5 choisi parmi les esters (méth)acryliques en $C_4$, de préférence esters acryliques en $C_4$ qui peuvent être identiques ou différents de M1,
    - au moins un monomère éthyléniquement insaturé M6 choisi parmi les monomères vinyl aromatiques, de préférence le styrène qui peut être identique ou différent de M2 et
    - au moins un monomère éthyléniquement insaturé M7, dont l'homopolymère a une Tg mesurée par DSC à 10°C/min comprise entre 80 et 120°C et a une valeur d'hydrophobie estimée par le logarithme du coefficient de partage entre octanol et eau (LogKow), Estimation Program Interface (EPI) Suite® KowWin de US Environmental Protection Agency's Office of Pollution Prevention and Toxics et Syracuse Research Corporation (SRC) selon EPIWEB 4.1, allant de 1 à 1,5, de préférence, ledit monomère M7 étant le méthacrylate de méthyle et
    - au moins un monomère éthyléniquement insaturé M8 porteur d'une fonction acétoacétoxy ou amine ou uréido, ladite fonction acétoacétoxy, amine ou uréido, étant portée par la surface externe de la phase polymère P2 en écorce

    la phase polymère P2 ainsi obtenue à partir de M5, M6, M7 et M8 ayant une hydrophobicité caractérisée par le paramètre de Hansch arrondi à une décimale, inférieur ou égal à 2,0 calculé en additionnant les produits des fractions massiques multipliées par le LogKow correspondant à chaque monomère composant et de préférence lesdites phases polymères P1 et P2 étant synthétisées successivement et avec P2 se trouvant en couche externe de ladite particule de polymère.

Plus particulièrement, le paramètre de Hansch du polymère P1 est différent et toujours supérieur au paramètre de Hansch du polymère P2, de préférence d'au moins 0,2 unités supérieur et plus préférentiellement d'au moins 0,3 unités supérieur.

La valeur d'hydrophobie qui correspond ici au logarithme du coefficient de partage entre octanol et eau, LogKow, est estimée par la méthode développée Estimation Program Interface (EPI) Suite® KowWin de Syracuse Research Corporation (SRC) selon EPIWEB 4.1. Des exemples de valeurs LogKow déterminées par EPIWEB 4.1 pour certains monomères sont cités dans la partie expérimentale.

Pour les polymères, le paramètre de Hansch est calculé pour la présente invention en additionnant sur i et pour chaque monomère $M_i$, le produit de la fraction massique $m_i$ (multipliée) par le $LogKow_i$ correspondant de chaque monomère $M_i$ du polymère considéré :

$$\text{Hansch paramètre} = \Sigma_i \, [m_i.LogKow_i]$$

Les Tg des polymères selon l'invention sont calculées à partir de l'équation de Fox :

$$1/Tg \text{ (calculée en °K)} = \Sigma_i (m_i/Tg_i)$$

avec, $m_i$ = fraction massique du monomère $M_i$ dans le copolymère et avec $\Sigma_i m_i = 1$ $Tg_i$ = Tg en °K de l'homopolymère issu de $M_i$

Les Tg des homopolymères sont par exemple disponibles dans « Polymer Handbook », édité par J. Brandrup and E. H. Immergut, Interscience Publishers (3rd Printing June 1967). Elles sont reprises ci-dessous.

Plus particulièrement, ledit liant, dispersion aqueuse de polymère selon l'invention, est exempt de tout monomère portant une fonction phosphate, phosphine, phosphonique, phosphodiester ou fonction fluorée, groupement acide fort et anionique, en particulier sulfonique. De même, ladite composition de revêtement est exempte de tout additif siliconé, fluoré, microcire et de tout ajout d'additifs polymères ou oligomères de Tg supérieure à la Tg Fox moyenne de polymère P1 + P2, que cet ajout soit sous forme de dispersion ou qu'il soit sous forme hydrodispersible. Ces additifs polymères ou oligomères sont en général des additifs modifiants (modificateurs) de surface du film de revêtement, en particulier par rapport à la dureté et la résistance aux taches.

La Tg Fox moyenne (Tg moyenne calculée selon Fox) sur l'ensemble du polymère, c'est à dire par rapport à P1 + P2, à partir de Tg1 et Tg2, peut varier de 0 à 40°C.

De préférence, ledit monomère M1, ester (méth)acrylique en $C_4$ est sélectionné parmi : n-butyl acrylate ou méthacrylate, isobutyl acrylate ou méthacrylate ou tertio-butyl acrylate ou méthacrylate, de préférence parmi le n-butyl acrylate ou méthacrylate, plus préférentiellement le n-butyl acrylate.

Le monomère éthyléniquement insaturé M2 est choisi parmi les monomères vinyl aromatiques, en particulier les vinyl toluènes, avec isomères o-, m-, p-vinyl toluène et le styrène. De préférence, le monomère M2 est le styrène.

Concernant le monomère M3, de préférence, il est sélectionné parmi l'acide acrylique, l'acide méthacrylique, l'acide fumarique, l'acide itaconique et de préférence parmi l'acide acrylique ou l'acide méthacrylique.

Concernant ledit monomère M4, il est choisi en particulier parmi les esters (méth)acryliques multifonctionnels ou un (méth)acrylate porteur d'un groupement silane bloqué par alcoxy, $-Si(OR)_3$, avec R étant méthyle ou éthyle. Les esters (méth)acryliques multifonctionnels (MFA) ont une fonctionnalité en (méth)acrylates d'au moins 2 et de préférence allant de 2 à 4.

Le monomère M5 de P2, ayant la même définition générale que M1 de P1, sélectionné dans la même liste citée ci-haut pour M1, peut être identique ou différent de M1.

De même, le monomère M6 de P2 a la même définition générale que le monomère M2 de P1 et peut être identique ou différent de M2 de P1.

Le monomère M7 préféré selon l'invention est le méthacrylate de méthyle.

Concernant ledit monomère M8, il est de préférence sélectionné, pour une fonction acétoacétoxy parmi l'acétoacétoxy éthyl (méth)acrylate (AAEM) et pour une fonction amino parmi le 2-diméthylamino éthyl (méth)acrylate (MADAME) et pour une fonction uréido parmi les uréido (méth)acrylates. Les uréido (méth)acrylates sont utilisés sous forme de solution dans le méthacrylate de méthyle ou en solution aqueuse dans l'eau.

De préférence, le taux en poids de M3 par rapport à P1 varie de 1 à 10% et plus préférentiellement de 1 à 5%. Le taux en poids d'agent réticulant interne M4 dans P1 peut varier de 0,1 à 1% et de préférence de 0,1 à 0,5%.

Concernant le taux en poids de M8 dans P2, il peut varier de 4 à 16% et de préférence de 4 à 8% par rapport au poids de P2.

Plus particulièrement, les taux en poids des monomères M1 à M4 dans P1 peuvent varier par rapport au poids de P1, en particulier pour M3 étant l'acide méthacrylique, suivant les plages suivantes :

- M1 : de 55 à 28%, de préférence de 55 à 42%
- M2 : de 34 à 71%, de préférence de 34 à 57%
- M3 : de 1 à 10%, de préférence de 1 à 5%
- M4 : de 0,1 à 1%, de préférence de 0,1 à 0,5%

avec la somme de % M1 + M2 + M3 + M4 = 100%.

Plus particulièrement, concernant les taux en poids des monomères M5 à M8 dans P2, ils peuvent varier par rapport au poids de P2, suivant les plages suivantes :

- M5 : de 51 à 21%, de préférence de 51 à 33%
- M6 : de 18 à 50%, de préférence de 18 à 38,5%
- M7 : de 20 à 52%, de préférence de 20 à 40,5%
- M8 : de 4 à 16%, de préférence de 4 à 8%

avec la somme de % M5 + M6 + M7 + M8 = 100%.

Ladite composition de revêtement est sélectionnée, en particulier parmi : peinture, vernis ou encre, de préférence parmi peinture et vernis. Plus particulièrement, il s'agit d'une composition de revêtement décoratif, de préférence de peinture ou de vernis, plus préférentiellement de peinture. Selon une préférence particulière, il s'agit d'une composition de revêtement barrière, en particulier d'une composition de revêtement anti-taches et anti-salissures, plus particulièrement d'une composition de revêtement anti-taches et salissures domestiques. Ladite composition de revêtement peut également être une composition de revêtement anticorrosion. Selon une option encore plus particulière, ladite composition de revêtement peut être une composition de revêtement à la fois anti-taches et anticorrosion.

Un autre objet de la présente invention concerne l'utilisation d'une composition de revêtement telle que définie ci-haut pour l'obtention de revêtements décoratifs à effet de barrière, en particulier pour la protection contre les taches et salissures domestiques. Ladite utilisation peut s'appliquer en particulier à la protection d'un substrat après revêtement, par rapport aux taches et salissures avec ledit substrat pouvant être choisi parmi : substrat mural en plâtre ou ciment, bois, carton, papier mural, verre, substrat métallique tel que l'aluminium, zinc et acier. Une utilisation particulière est pour le revêtement décoratif sur substrat métallique résistant à la corrosion et aux taches ou salissures comme déjà mentionné ci-haut.

Fait également partie de la présente invention la dispersion aqueuse spécifique de polymère, telle que définie ci-haut comme liant dans ladite composition de revêtement selon l'invention. Ladite dispersion aqueuse de polymère est le composant principal de la composition de revêtement de l'invention et c'est bien l'objet produit tel que défini pour ladite composition de revêtement qui est ici l'objet de l'invention.

L'invention concerne également un procédé de préparation d'une dispersion aqueuse telle que définie ci-avant, lequel comprend au moins deux étapes, de préférence deux étapes de polymérisation correspondant respectivement aux phases de polymères P1 et P2 :

i) première étape de polymérisation en émulsion, y compris une étape de semence de polymère, d'une première composition de monomères comprenant en émulsion lesdits monomères M1, M2, M3 et M4 tels que définis ci-haut selon l'invention et correspondant à la phase de polymère P1, avec ledit monomère M3 étant sous forme majoritairement salifiée et

suivie d'une

ii) deuxième étape de polymérisation en émulsion d'une deuxième composition de monomères comprenant en émulsion lesdits monomères M5, M6, M7 et M8 tels que définis ci-haut selon l'invention et correspondant à la phase P2 de polymère, de préférence ladite polymérisation étant réalisée dans des conditions de pH inférieur ou égal à 9 et d'au moins 7 ($7 \leq pH \leq 9$) et plus préférentiellement inférieur ou égal à 8 et d'au moins 7 ($7 \leq pH \leq 8$).

Fait également partie de l'invention l'utilisation d'une dispersion telle que définie ci-haut ou obtenue par un procédé tel que défini ci-avant, comme liant dans des compositions de revêtements, pour revêtements barrière résistant aux taches et salissures et/ou éventuellement protégeant des substrats métalliques de la corrosion. Plus particulièrement, lesdits revêtements s'appliquent sur substrat choisi parmi : métal, plâtre, ciment, bois, y compris aggloméré, verre, carton, papier, céramique et carrelage.

Finalement, fait partie de l'invention le produit final obtenu, lequel est un revêtement, en particulier revêtement de peinture, obtenu à partir d'au moins une composition de revêtement telle que définie ci-haut selon l'invention ou à partir d'une dispersion aqueuse telle que définie selon l'invention ou d'une dispersion aqueuse obtenue par un procédé tel que défini selon l'invention.

Les exemples qui suivent sont donnés à titre d'illustration de l'invention et de ses performances sans nullement limiter la portée de l'invention.

**Partie expérimentale**

1) Matières premières de préparation des dispersions

Tableau 1 : Matières premières utilisées dans la synthèse des dispersions

| Constituant | Fonction | Nature chimique | Fournisseur |
|---|---|---|---|
| Polirol® PHE 925A | Tensio-actif | Alkyl éther phosphate ammonium salt 25% dans l'eau | Lamberti |
| Disponil® FES 32 | Tensio-actif | Sulfate d'alcool gras polyglycol éther, sel de sodium 31% dans l'eau | BASF |

(suite)

| Constituant | Fonction | Nature chimique | Fournisseur |
|---|---|---|---|
| ABu | Monomère M1, M5 | Acrylate de Butyle | Arkema |
| Sty | Monomère M2, M6 | Styrène | BASF |
| MAM | Monomère M7 | Méthacrylate de Méthyle | BASF |
| AA | Monomère M3 | Acide Acrylique | Arkema |
| AMA | Monomère M3 | Acide Méthacrylique | BASF |
| Silquest® A174NT | Monomère M4 | Méthacryloxy functional triméthoxy silane | Momentive |
| AAEM | Monomère M8 | AcétoAcétoxyEthyl Méthacrylate | Eastman |
| MADAME | Monomère M8 | DiMéthylAminoEthyl Méthacrylate | BASF |
| $(NH4)_2S_2O_8$ | Peroxyde | Persulfate d'ammonium | Aldrich |
| TBHP | Peroxyde | Tertio-butyle hydroperoxyde à 70% | Aldrich |
| SFS | Réducteur | Formaldéhyde sulfoxylate de sodium | Bruggeman |
| NH4OH | Base Neutralisation | Hydroxyde d'ammonium | Prolabo |
| Acticide MBS | Biocide | Solution aqueuse de méthylisothiazoline (MIT) et de benzisothiazolinone (BIT) (2,5% MIT / 2,5% BIT) | Thor |

## A) Description des synthèses

### 1) Mode opératoire de préparation des dispersions

Ce mode opératoire décrit ci-dessous la synthèse de la dispersion selon les exemples de l'invention. En effet, les Tg du cœur (Tg1) et de l'écorce (Tg2) sont ajustées en variant le rapport pondéral de styrène, de méthacrylate de méthyle et d'acrylate de butyle présents dans chacune des phases P1 et P2 selon la loi de Fox et de manière à obtenir, avec les autres monomères présents, le pourcentage en poids total de chacune des phases P1 et P2, leur somme faisant 100.

### 1.1) Matériel utilisé

Un réacteur de 10 l (contenance interne) en acier, équipé d'une double enveloppe, muni d'une agitation efficace (vortex), d'un réfrigérant à triple flux, d'un contrôle et d'une régulation de la température matière. Le réacteur comporte le nombre de raccords d'introductions nécessaires à l'introduction séparée des différents composants, ainsi qu'une introduction dédiée à l'inertage à l'azote de l'ensemble. L'étanchéité est vérifiée avant chaque synthèse. L'installation est équipée d'un système permettant de contrôler les débits d'introduction des composants.

### 1.2) Description du mode opératoire général pour les dispersions des essais 1 à 5 (latex 1 à 5) selon l'invention

L'eau utilisée pour toutes les préparations est déminéralisée (< 5mScm$^{-1}$) et désoxygénée (N2).

### Préparation de la charge initiale

Le tensio-actif, 24 g de Disponil® FES 32, est solubilisé dans la quantité d'eau prévue à cet effet dans le pied de cuve, soit 1459,2 g. La température du mélange est portée à 85°C pour l'ensemencement.

### Préparation de la préémulsion P1

Le tensio-actif, 216 g de Polirol® PHE925A, est solubilisé dans la quantité d'eau prévue pour la préémulsion : 1350 g.
Une fois le tensio-actif solubilisé, les monomères sont ajoutés tour à tour et sous agitation :

- 1369,8 g de Styrène

- 1425,6 g d'ABU
- 3,6 g de Silquest® A174NT
- 126 g d'AMA

La préémulsion ainsi formée est blanche et stable, au moins le temps de la synthèse. Elle est maintenue sous agitation lente. Elle sera utilisée pour la synthèse du cœur de la particule.

**Préparation du prémix (préémulsion) P2**

Sont ajoutés tour à tour et sous agitation :

- 299,7 g d'ABu
- 177,3 g de Styrène
- 144 g de MAM
- 54 g d'AAEM

Ce prémix servira à la synthèse de l'écorce de la particule.

**Préparation de la solution de peroxyde**

12,6 g de persulfate d'ammonium sont solubilisés dans 113,4 g d'eau.

**Préparation de la solution d'ammoniaque**

57,73 g de solution $NH_4OH$ 28% dilués dans 77,06 g d'eau.

**Préparation des solutions pour le traitement redox**

7,71 g de TBHP (solution à 70%) est solubilisé dans 33,82 g d'eau
4,68 g de SFS dans 84,60 g d'eau.

**Polymérisation**

i) Ensemencement

A 85°C, sont introduits pour l'ensemencement 5% de la préémulsion 1 soit 224,55 g. Une fois la température stabilisée, 25% de la solution de persulfate d'ammonium est ajoutée, soit 31,5 g.

ii) Synthèse du cœur P1

Au maximum de l'exothermie, débutent pour une durée de 180 minutes et à une température de matière stabilisée à 85 ± 2°C, les introductions séparées de :

1. 4266,45 g de la préémulsion P1 (95%)
2. 32,76 g de la solution de peroxyde (26%)
3. 64,79 g de la solution d'ammoniaque (48,1%)

**Important** : Le pH de cette partie de la synthèse est compris entre 4,5 et 5 si l'acide est l'AMA. Inférieur à 3 pour les autres acides carboxyliques acryliques, fumariques ou itaconiques. Dans ce cas, la quantité de solution d'ammoniaque est ajustée.

iii) Etape de cuisson thermique

A la fin de la coulée de P1, le préémulseur est rincé et l'eau de rinçage, 104,5 g, est introduite dans le réacteur. La température est ensuite maintenue pendant 15 minutes à 85°C.

iv) Etape de finition de la première partie

Introduction en 60 min de 13% de la solution de peroxyde, soit 16,38 g, toujours à 85°C, suivie de 15 min de cuisson thermique.

v) Ajout de 51,9% de la solution d'ammoniaque, 68,74g, en 30 min environ, quantité suffisante pour avoir un pH de 7,5.

vi) Synthèse de l'écorce P2

A 85°C, introduction en 60 min :

- 100% du prémix P2, 675 g.
- 24,1% de la solution de peroxyde (persulfate d'ammonium), soit 30,37 g.

Le préémulseur est ensuite rincé et l'eau de rinçage, 69,66 g, est introduite dans le réacteur. Cette étape est suivie d'une dernière coulée de la solution de peroxyde d'une durée de 30 min toujours à 85°C :

- 11,9% de la solution de peroxyde (persulfate d'ammonium), soit 15 g.

Au début de cette étape (synthèse de l'écorce) grâce à l'ajout de la solution d'ammoniaque (v), le pH est à 8 et se stabilise rapidement (en moins de 30 min) à 7,5. Il reste à cette valeur jusqu'à la fin de la synthèse.

La fin de cette étape (synthèse de l'écorce) est suivie d'une cuisson thermique de 60 min.

vii) Traitement redox

A 60°C, une solution de TBHP est coulée en même temps qu'une solution de SFS :

- 41,54 g de solution de TBHP à 13% pendant 60 min.
- 89,28 g de solution de SFS à 5% pendant 75 min.

viii) Additions finales

A 30-35°C, le latex est neutralisé par addition de solution d'ammoniaque à pH 8 et post-additionné d'Acticide MBS (18,9 g). L'encrassement du réacteur est < à 0,1% et la quantité de grains obtenue par filtration sur toile 100 $\mu$m est de 10 ppm. La taille finale est de 120 nm, la TMFF mesurée est de 20°C.

2) Caractérisation physico-chimique des dispersions

a) Extrait sec (ES)

L'extrait sec des dispersions aqueuses est mesuré selon la norme ISO 3251.

b) pH

Le pH des dispersions aqueuses est mesuré selon la norme ISO 976.

c) Viscosité

La viscosité des dispersions aqueuses est mesurée selon la norme ISO 2555.

d) Taille des particules

La taille des particules est mesurée par Spectroscopie de Corrélation de Photons (PCS), à l'aide d'un appareillage N4+ de Beckman Coulter. L'échantillon est dilué (3 à 5 gouttes d'émulsion dans 50 ml d'eau) dans une cuve en polystyrène à l'aide d'eau désionisée sur un filtre en acétate de cellulose de 0,22 $\mu$m. La taille des particules est mesurée à une température de 25°C, sous un angle de mesure de 90° et à une longueur d'onde du laser de 633 nm.

e) Température minimale de formation de film (TMFF)

La TMFF des dispersions aqueuses est mesurée selon la norme ISO 2115.

f) Taux d'accrochage

Le taux d'accrochage (« fouling ») quantifie l'encrassement des réacteurs par la synthèse de dispersions aqueuses d'homopolymères ou de copolymères. Il est évalué en interne par la méthode CRO-WBP-103. L'encrassement est de deux types :

- l'accrochage, c'est-à-dire tout dépôt de polymère situé sous le niveau final du latex retenu sur l'ancre, les gaines de température, les contre-pales ou les parois du réacteur.
- Les peaux de surface, lesquelles, quand elles se forment, apparaissent le plus souvent au refroidissement du latex. Elles ne doivent pas être incluses dans le calcul de l'accrochage.

Après récupération, ces dépôts sont lavés à l'eau, puis séchés à l'étuve ventilée à 105°C jusqu'à poids constant (environ 2 heures). Le résultat est exprimé en pourcentage par rapport à la masse théorique de latex fabriqué.

g) Taux de grains

Sont considérés comme des grains, toute particule contenue dans le latex de diamètre beaucoup plus important que le diamètre moyen des particules du latex (plusieurs centaines de fois) et constituant un résidu à la filtration. Le taux de grains est évalué en interne par la méthode CRO-WBP-104, selon la norme ISO 4576. Une partie du latex est filtrée sur une toile de 100 $\mu$m préalablement pesée sur une balance de précision. Cette toile est ensuite débarrassée de toute trace de latex, lavée, puis séchée dans une étuve à 105°C jusqu'à poids constant. La toile est ainsi pesée et comparée à la première valeur.

3) Log Kow des monomères

Ce paramètre est déterminé (calculé) selon la méthode « Estimation Programs Interface (EPI) Suite® » développée par US Environmental Protection Agency's Office of Pollution Prevention and Toxics and Syracuse Research Corporation (SRC), avec EPIWEB 4.1. Le tableau 2 ci-dessous présente les valeurs calculées de ce paramètre pour quelques monomères.

Tableau 2

| Monomères | Log Kow (EPIWEB 4.1) | | |
|---|---|---|---|
| Acrylamide | - 0,8074 | | |
| Acide itaconique | - 0,3434 | | |
| Acétoacétyléthyl méthacrylate | 0,2393 | | |
| Hydroxyéthyl méthacrylate | 0,3014 | | |
| Uréido méthacrylate | 0,409 | | |
| Acide acrylique | 0,4415 | | |
| Gamma-Méthacryloxypropyl triméthoxysilane | 0,7532 | | |
| Diméthylaminoéthyl méthacrylate | 0,9723 | | |
| Acide méthacrylique | 0,9888 | | |
| Méthyl acrylate | | 0,7278 | |
| Ethyl acrylate | | 1,2189 | |
| Méthyl méthacrylate | | 1,2751 | |
| Ethyl méthacrylate | | 1,7662 | |
| Butyl acrylate | | 2,2011 | |

(suite)

| Monomères | Log Kow (EPIWEB 4.1) | |
|---|---|---|
| Isobutyl méthacrylate | 2,6749 | |
| Butyl méthacrylate | 2,7488 | |
| Ethylhexyl acrylate | 4,5831 | |
| Isobornyl méthacrylate | 4,7589 | |
| Lauryl acrylate | 6,1299 | |
| Acrylonitrile | | 0,2092 |
| Vinyl acétate | | 0,7278 |
| Styrène | | 2,8950 |

Calculs du paramètre de Hansch et des Tg Fox des polymères des dispersions (latex) selon l'invention

Le paramètre de Hansch pour le polymère considéré est arrondi à une décimale et calculé en additionnant les produits des fractions massiques $m_i$ multipliées par le $LogKow_i$ correspondant de chaque monomère $M_i$ du polymère considéré :

$$\text{Paramètre de Hansch} = \Sigma_i\, [m_i.LogKow_i]$$

Les Tg des polymères sont calculées à partir de l'équation de Fox :

$$1/Tg\ (Tg\ en\ °K) = \Sigma_i\, (m_i/Tg_i)$$

avec $m_i$ = fraction massique du monomère $M_i$ dans le copolymère avec $\Sigma_i\, m_i = 1$ $Tg_i$ = Tg de l'homopolymère issu de $M_i$, en °K.

Les Tg des homopolymères sont (par exemple) disponibles dans « Polymer Handbook », édité par J. Brandrup and E. H. Immergut, Interscience Publishers 3rd Printing June 1967. Elles sont reprises ci-dessous pour les monomères utilisés aux tableaux 3 et 4. Le tableau 3 présente aussi les Tg calculées et la composition de P1 et P2 et le tableau 4 les paramètres de Hansch calculés pour chaque polymère P1 et P2 de chaque dispersion (latex) examinée selon l'invention.

Tableau 3

| Monomères compositions | Tg °C | Latex 1 | | Latex 2 | | Latex 3 | | Latex 4 | | Latex 5 | |
|---|---|---|---|---|---|---|---|---|---|---|---|
| | | P1 | P2 | P1 | P2 | P1 | P2 | P1 | P2 | P1 | P2 |
| ABu | -54 | 39,55 | 7,95 | 39,6 | 8,325 | 39,6 | 8,075 | 38,4 | 7,7 | 38,4 | 7,7 |
| Styr | 100 | 38 | 4,55 | 38,05 | 4,925 | 38,05 | 4,675 | 39,25 | 4,05 | 37,75 | 4,05 |
| MAM | 105 | | 4 | | 4 | | 4 | | 4 | | 4 |
| Silquest® | - | 0,2 | | 0,1 | | 0,1 | | 0,1 | | 0,1 | |
| AMA | 228 | 3,5 | | 3,5 | | 3,5 | | | | | |
| AA | 106 | | | | | | | 3,5 | | 5 | |
| MADAME | 19 | | 2,25 | | | | 1 | | | | |
| AAEM | 18 | | | | 1,5 | | 1 | | 3 | | 3 |
| Total P1 / P2 | | 81,25 | 18,75 | 81,25 | 18,75 | 81,25 | 18,75 | 81,25 | 18,75 | 81,25 | 18,75 |
| Σ P1 + P2 | | 100,00 | | 100,00 | | 100,00 | | 100,00 | | 100,00 | |
| Tg Fox °C | | 7 | 7,7 | 7 | 7 | 7 | 7,5 | 7 | 7,2 | 7,1 | 7,2 |

(suite)

| Monomères compositions | Tg °C | Latex 1 | | Latex 2 | | Latex 3 | | Latex 4 | | Latex 5 | |
|---|---|---|---|---|---|---|---|---|---|---|---|
| | | P1 | P2 | P1 | P2 | P1 | P2 | P1 | P2 | P1 | P2 |
| Moyenne Tg Fox °C (vs P1 + P2) | | 7,1 | | 7 | | 7,1 | | 7 | | 7,1 | |

Tableau 4 : Paramètre de Hansch pour P1, P2 des latex 1 à 5 selon l'invention

| Monomères | LogKow | Latex 1 | | Latex 2 | | Latex 3 | | Latex 4 | | Latex 5 | |
|---|---|---|---|---|---|---|---|---|---|---|---|
| | | P1 | P2 | P1 | P2 | P1 | P2 | P1 | P2 | P1 | P2 |
| ABu | 2,2011 | 0,487 | 0,42 | 0,487 | 0,444 | 0,487 | 0,431 | 0,473 | 0,41 | 0,473 | 0,41 |
| Styr | 2,895 | 0,468 | 0,24 | 0,468 | 0,263 | 0,468 | 0,249 | 0,483 | 0,22 | 0,465 | 0,22 |
| MAM | 1,2751 | 0 | 0,21 | 0 | 0,213 | 0 | 0,213 | 0 | 0,21 | 0 | 0,21 |
| Silquest® | 0,7532 | 0,002 | 0 | 0,001 | 0 | 0,001 | 0 | 0,001 | 0 | 0,001 | 0 |
| AMA | 0,9888 | 0,043 | 0 | 0,043 | 0 | 0,043 | 0 | 0 | 0 | 0 | 0 |
| AA | 0,4415 | 0 | 0 | 0 | 0 | 0 | 0 | 0,043 | 0 | 0,062 | 0 |
| MADAME | 0,9723 | 0 | 0,12 | 0 | 0 | 0 | 0,053 | 0 | 0 | 0 | 0 |
| AAEM | 0,2393 | 0 | 0 | 0 | 0,08 | 0 | 0,053 | 0 | 0,16 | 0 | 0,16 |
| Paramètre Hansch vs P1 et P2 | | 2,47 | 2,02 | 2,47 | 2,03 | 2,47 | 2,01 | 2,46 | 1,84 | 2,41 | 1,84 |
| Différence paramètre Hansch de P1 vs P2 | | 0,45 | | 0,44 | | 0,46 | | 0,62 | | 0,57 | |

4) Caractéristiques des dispersions « Latex 1 à 5 » selon l'invention

Tableau 5

| Caractéristiques | Latex 1 | Latex 2 | Latex 3 | Latex 4 | Latex 5 |
|---|---|---|---|---|---|
| TMFF (°C) | 21 | 20 | 20 | 22 | 22 |
| ES (%) | 50,4 | 50,8 | 50,5 | 50,1 | 51,5 |
| Taille particules (nm) | 125 | 120 | 130 | 120 | 130 |
| pH | 8 | 7,5 | 8 | 8,5 | 8 |
| Viscosité Brookfield (mPa.s) | 1800 | 600 | 1400 | 1100 | 7000 |
| Taux d'accrochage (Fouling) (en %) | 0,1 | 0,1 | 0,1 | 0,1 | 0,1 |
| Taux de grains (Grits) (en ppm) | 60 | 10 | 20 | 30 | 40 |

5) Latex commerciaux hors de l'invention comme référence de comparaison

Comme référence de comparaison, sont pris 4 latex type styrène-acrylique préparés en une ou en deux étapes et ayant comme différence par rapport à l'invention au moins l'absence d'un monomère tel que défini selon M7 dans la phase P2 (ici absence de MAM vs exemples de l'invention).

Tableau 6 : latex de référence, comparatifs

| | Latex A | Latex B | Latex C | Latex D |
|---|---|---|---|---|
| Latex Styrène/Acrylique | X | X | X | X |

(suite)

|  | Latex A | Latex B | Latex C | Latex D |
|---|---|---|---|---|
| Synthèse en une étape | X | X |  |  |
| Synthèse en 2 étapes |  |  | X | X |
| TMFF < 5°C | X |  | X |  |
| TMFF 20°C |  | X |  | X |
| solides (%) | 50 | 50 | 45 | 50 |
| Taille particules (nm) | 150 | 150 | 100 | 100 |
| pH | 8 | 8 | 8 | 8 |
| Viscosité Brookfield (mPa.s) | < 2500 | < 9000 | < 1000 | < 2000 |

## B) Résultats applicatifs

1) Préparation des formulations de peintures à base des dispersions aqueuses (latex)

L'évaluation des performances des dispersions aqueuses décrites précédemment est effectuée sur des films appliqués à partir de formulations de peintures brillantes de CPV = 16.

1.1) Matières premières utilisées pour la formulation des peintures hormis les dispersions aqueuses (latex) comparées

Tableau 7

| Constituants | Fonction | Nature chimique | Fournisseur |
|---|---|---|---|
| BYK® 024 | Antimousse | Mélange de polysiloxanes dans un polyglycol et de particules solides hydrophobes | BYK additives & instruments |
| ACTICIDE® MBS | Biocide | Solution aqueuse de méthylisothiazoline (MIT) et de benzisothiazoline (BIT) | Thor |
| DISPERBYK® 190 | Agent dispersant | Copolymère bloc à haute masse moléculaire | BYK additives & instruments |
| TIONA® 595 | Pigment | Dioxyde de titane | Cristal Global |
| TEXANOL® | Agent de coalescence | Monoisobutyrate de 2,2,4-triméthyl-1,3-pentanediol | Eastman |
| COAPUR® 2025 | Epaississant | Epaississant polyuréthane associatif | Coatex |

1.2) Mode opératoire de formulation des peintures avec CPV = 16 (CPV : concentration pigmentaire volumique)

1.2.1) Fabrication de la base de broyage

Matériel nécessaire :

- Récipient : double enveloppe refroidie par le réseau d'eau de ville
- Disperseur : Disperlux® modèle 2075
- Pale de dispersion : diamètre équivalent au tiers du diamètre du récipient

On introduit dans le récipient successivement et sous agitation l'eau et les différents constituants. L'agitation est alors portée à grande vitesse jusqu'à obtenir une base de broyage de finesse < 10 $\mu$m.

1.2.2) Fabrication de la peinture

Matériel nécessaire :

- Récipient : bécher plastique
- Disperseur : Disperlux® modèle 2075
- Pale de dispersion : diamètre supérieur aux deux tiers du diamètre du récipient

On introduit dans le récipient successivement et sous agitation, le liant, le coalescent, la base de broyage précédemment préparée et les différents constituants. On veillera à ne pas introduire le coalescent et l'épaississant trop rapidement (goutte à goutte recommandé).

Les compositions précises de toutes les formulations des peintures à base des différentes dispersions aqueuses de polymère (latex) testées sont présentées au tableau 8 ci-dessous.

Tableau 8 : Composition des formulations de peintures à base des dispersions (latex) testées

| Constituants | Fonction | Parties en poids (%) | | | | | | | | |
|---|---|---|---|---|---|---|---|---|---|---|
| EAU | Solvant | 4,00 | | | | | | | | |
| BYK® 024 | Antimousse | 0,10 | | | | | | | | |
| ACTICIDE® MBS | Biocide | 0,20 | | | | | | | | |
| DISPERBYK® 190 | Agent dispersant | 0,85 | | | | | | | | |
| TIONA® 595 | Pigment | 21,00 | | | | | | | | |
| **Total de la base de broyage** | | **26,15** | | | | | | | | |
| **Composants complémentaires de peinture à base de** | | Latex A | Latex B | Latex C | Latex D | Latex 1 | Latex 2 | Latex 3 | Latex 4 | Latex 5 |
| DISPERSION ACRYLIQUE AQUEUSE (latex) | Liant | 51,76 | 59,94 | 68,66 | 57,09 | 57,75 | 57,26 | 57,63 | 58,25 | 58,63 |
| TEXANOL® | Agent de coalescence | - | 1,75 | - | 1,71 | 1,75 | 1,75 | 1,75 | 1,75 | 1,75 |
| EAU | Solvant | 14,45 | 9,25 | 1,92 | 11,96 | 11,44 | 11,57 | 11,38 | 11,12 | 10,74 |
| COAPUR® 2025 | Epaississant | 7,64 | 2,91 | 3,27 | 3,09 | 2,91 | 3,27 | 3,09 | 2,73 | 2,73 |
| **Total peinture** | | **100,00** | | | | | | | | |
| **Caractéristiques des formulations**<br>calculées grâce au logiciel de formulation PV-FORMULA version 4-13 de François Magnin & Pierre Vergne - Numéro de licence 5607-8859-6615-7893 | | | | | | | | | | |
| **CVP** (sans adjuvant) | % | **16,00** | | | | | | | | |
| Densité | g/cm$^3$ | 1,19 | 1,22 | 1,23 | 1,21 | 1,22 | 1,22 | 1,22 | 1,22 | 1,22 |
| Extrait sec en poids | % | 49,50 | 51,37 | 51,79 | 50,77 | 51,28 | 51,35 | 51,32 | 51,26 | 51,27 |
| Extrait sec en volume | % | 40,60 | 40,39 | 40,70 | 40,13 | 40,35 | 40,44 | 40,40 | 40,31 | 40,32 |

Résistance à la tache

La résistance aux taches domestiques est testée sur les peintures appliquées à une épaisseur de 200 μm humide sur des plaques PVC Leneta P121-10N après une semaine de séchage à 23°C et 50% HR (HR : humidité relative). Les taches sont en contact avec la peinture à tester pendant 15 min et 1 heure. La cotation de 1 à 5 se fait selon la norme NF EN 12720 après nettoyage de la tache à l'aide d'une solution diluée de Teepol. Cette cotation tient compte des pertes de brillant, des variations de coloration ou des modifications de la structure du film de peinture testé :

5 : Aucun changement visible (aucun dommage).
4 : Léger changement de brillance ou de couleur, visible uniquement lorsque la source de lumière se reflète sur la surface d'essai ou de très près du point examiné et est renvoyée vers l'œil de l'observateur ou quelques marques isolées à peine visible.
3 : Marque légère, visible sous plusieurs angles d'observation.
2 : Marque prononcée, la structure de la surface étant toutefois pratiquement inchangée.
1 : Marque prononcée, la structure de la surface étant modifiée ou bien le matériau étant totalement ou partiellement enlevé.

Les taches testées sont à base de : vin rouge, café, encre bleue, lave vitre, ketchup, crème main, surligneur fluorescent « stabilo ».

Les résultats sont présentés au tableau 9 ci-dessous.

Tableau 9 : résultats comparatifs sur résistance aux taches

| Peintures à base des dispersions | | Latex A | Latex B | Latex C | Latex D | Latex 1 | Latex 2 | Latex 3 | Latex 4 | Latex 5 |
|---|---|---|---|---|---|---|---|---|---|---|
| Test | Tache testée | | | | | | | | | |
| Résistance aux taches Cotation selon NF EN 12720 | Vin rouge | 2 / 2 | 2 / 2 | 2 / 2 | 2 / 2 | 4 / 3 | 4 / 3 | 4 / 3 | 4 / 3 | 4 / 3 |
| | Café | 2 / 2 | 3 / 3 | 2 / 2 | 2 / 2 | 4 / 3 | 4 / 3 | 4 / 3 | 4 / 3 | 4 / 3 |
| | Encre bleue | 2 / 2 | 3 / 3 | 3 / 3 | 2 / 2 | 4 / 3 | 4 / 3 | 4 / 4 | 4 / 4 | 4 / 4 |
| | « Stabilo » | 2 / 2 | 3 / 3 | 2 / 2 | 2 / 2 | 5 / 5 | 5 / 5 | 5 / 5 | 5 / 5 | 5 / 5 |
| | Lave vitre | 3 / 3 | 4 / 1 | 3 / 3 | 4 / 4 | 4 / 4 | 4 / 4 | 4 / 4 | 4 / 4 | 4 / 4 |
| | Crème main | 4 / 3 | 4 / 1 | 4 / 4 | 4 / 4 | 4 / 4 | 4 / 4 | 4 / 4 | 4 / 4 | 4 / 4 |
| | Ketchup | 5 / 4 | 4 / 4 | 5 / 4 | 5 / 5 | 5 / 5 | 5 / 5 | 5 / 5 | 5 / 5 | 5 / 5 |

**Revendications**

1. Composition aqueuse de revêtement, **caractérisée en ce qu'**elle comprend comme liant une dispersion aqueuse de polymère **caractérisée en ce que** ladite dispersion de polymère a une température minimale de formation de film (TMFF) selon ISO 2115 entre 0 et 50°C, de préférence entre 0 et 40°C et **en ce qu'**elle comprend des particules de polymère obtenues par polymérisation en émulsion radicalaire en au moins deux étapes, de préférence en deux étapes et que lesdites particules comprennent au moins deux phases polymères P1 et P2, de préférence deux, avec le polymère de la phase P1 représentant de 75 à 90% en poids du polymère total P1 + P2 et le polymère de la phase P2 représentant de 10 à 25% en poids du polymère total P1 + P2, avec P1 ayant une température de transition vitreuse Tg1 calculée selon Fox, allant de 0 à 40°C, de préférence de 0 à 20°C et P2 ayant une température de transition vitreuse Tg2 calculée selon Fox allant de 0 à 40°C, de préférence de 0 à 20°C et pour Tg1 et Tg2 allant de 0 à 20°C, pouvant être identiques ou différentes, à ± 2°C près et avec,

- ledit polymère P1 comprenant des unités de structure issues de 4 monomères M1 à M4 suivants :

- au moins un monomère éthyléniquement insaturé M1 choisi parmi les esters (méth)acryliques en $C_4$, de préférence esters acryliques en $C_4$ et plus préférentiellement M1 étant l'acrylate de butyle et
- au moins un monomère éthyléniquement insaturé M2 choisi parmi les monomères vinyl aromatiques, en particulier les vinyl toluènes et de préférence le styrène et
- au moins un monomère éthyléniquement insaturé M3 porteur d'un groupement acide carboxylique et
- au moins un monomère M4 ayant une fonction d'agent réticulant interne de ladite phase P1, de préférence choisi parmi les monomères porteurs d'au moins deux insaturations éthyléniques copolymérisables avec les insaturations éthyléniques des monomères M1 à M3 ou porteurs d'une insaturation éthylénique et d'une fonction silane bloquée sous forme alcoxy-silane

- ledit polymère P2 comprenant des unités de structure issues de 4 monomères M5 à M8 suivants :

- au moins un monomère éthyléniquement insaturé M5 choisi parmi les esters (méth)acryliques en $C_4$, de préférence esters acryliques en $C_4$ qui peuvent être identiques ou différents de M1,
- au moins un monomère éthyléniquement insaturé M6 choisi parmi les monomères vinyl aromatiques, en particulier les vinyl toluènes et le styrène et de préférence le styrène, monomère M6 qui peut être identique ou différent de M2 et
- au moins un monomère éthyléniquement insaturé M7, dont l'homopolymère a une Tg mesurée par DSC à 10°C/min comprise entre 80 et 120°C et a une valeur d'hydrophobie estimée par le logarithme du coefficient de partage entre octanol et eau (LogKow), Estimation Program Interface Suite® KowWin de US Environmental Protection Agency's Office of Pollution Prevention and Toxics and Syracuse Research Corporation (SRC) selon EPIWEB 4.1, allant de 1 à 1,5, de préférence, ledit monomère M7 étant le méthacrylate de méthyle et
- au moins un monomère éthyléniquement insaturé M8 porteur d'une fonction acétoacétoxy ou amine ou uréido, ladite fonction acétoacétoxy, amine ou uréido, étant portée par la surface externe de la phase polymère P2 en écorce

la phase polymère P2 ainsi obtenue à partir de M5, M6, M7 et M8 ayant une hydrophobicité **caractérisée par** le paramètre de Hansch arrondi à une décimale, inférieur ou égal à 2,0 calculé en additionnant les produits des fractions massiques multipliées par le LogKow correspondant à chaque monomère composant et de préférence lesdites phases polymères P1 et P2 étant synthétisées successivement et avec P2 se trouvant en couche externe de ladite particule de polymère.

2. Composition selon la revendication 1, **caractérisée en ce que** ledit liant est exempt de tout monomère portant une fonction phosphate, phosphine, phosphonique, phosphodiester ou fonction fluorée, groupement acide fort et anionique, en particulier sulfonique et **en ce que** ladite composition de revêtement est exempte de tout additif siliconé, fluoré, microcire et de tout ajout d'additifs polymères ou d'oligomères de Tg supérieure à la Tg Fox moyenne de polymère P1 + P2, que cet ajout soit sous forme de dispersion ou qu'il soit sous forme hydrodispersible.

3. Composition selon la revendication 1 ou 2, **caractérisée en ce que** ledit monomère M1 ester (méth)acrylique en $C_4$ est sélectionné parmi n-butyl acrylate ou méthacrylate, isobutyl acrylate ou méthacrylate ou tertio-butyl acrylate ou méthacrylate, de préférence parmi le n-butyl acrylate ou méthacrylate, plus préférentiellement parmi le n-butyl acrylate.

4. Composition selon l'une des revendications 1 à 3, **caractérisée en ce que** ledit monomère M3 est sélectionné parmi l'acide acrylique, l'acide méthacrylique, l'acide fumarique, l'acide itaconique et de préférence parmi l'acide acrylique ou l'acide méthacrylique.

5. Composition selon l'une des revendications 1 à 4, **caractérisée en ce que** ledit monomère M4 est choisi parmi les esters (méth)acryliques multifonctionnels ou un (méth)acrylate porteur d'un groupement silane bloqué par alcoxy $-Si(OR)_3$, avec R étant méthyle ou éthyle.

6. Composition selon l'une des revendications 1 à 5, **caractérisée en ce que** ledit monomère M8 est sélectionné pour la fonction acétoacétoxy parmi l'acétoacétoxy éthyl (méth)acrylate (AAEM) et pour la fonction amino parmi le 2-diméthylamino éthyl (méth)acrylate (MADAME) et pour une fonction uréido parmi les uréido (méth)acrylates.

**7.** Composition selon l'une des revendications 1 à 6, **caractérisée en ce que** ledit revêtement est sélectionné parmi : peinture, vernis ou encre, de préférence peinture ou vernis.

**8.** Composition selon l'une des revendications 1 à 7, **caractérisée en ce qu'**il s'agit d'une composition de revêtement décoratif, de préférence de peinture ou de vernis, plus préférentiellement de peinture.

**9.** Composition selon l'une des revendications 1 à 8, **caractérisée en ce qu'**il s'agit d'une composition de revêtement barrière, en particulier d'une composition de revêtement anti-taches et anti-salissures, plus particulièrement d'une composition de revêtement anti-taches et salissures domestiques.

**10.** Composition selon l'une des revendications 1 à 8, **caractérisée en ce qu'**il s'agit d'une composition de revêtement anticorrosion.

**11.** Composition selon l'une des revendications 1 à 8, **caractérisée en ce qu'**il s'agit d'une composition de revêtement anti-taches et anticorrosion.

**12.** Composition selon l'une des revendications 1 à 11, **caractérisée en ce que** ledit paramètre de Hansch pour le polymère P1 est différent et supérieur du paramètre de Hansch du polymère P2, d'au moins 0,2 unités et de préférence d'au moins 0,3 unités.

**13.** Utilisation d'une composition de revêtement telle que définie selon l'une des revendications 1 à 12, pour l'obtention de revêtements décoratifs à effet de barrière, en particulier pour la protection contre les taches et salissures domestiques.

**14.** Utilisation selon la revendication 13, **caractérisée en ce qu'**elle s'applique à la protection d'un substrat après revêtement, par rapport aux taches et salissures et **en ce que** ledit substrat est choisi parmi : substrat mural en plâtre ou ciment, bois, carton, papier mural, verre, substrat métallique.

**15.** Utilisation d'une composition de revêtement telle que définie selon l'une des revendications 1 à 12, pour le revêtement décoratif sur substrat métallique résistant à la corrosion et aux taches ou salissures.

**16.** Dispersion aqueuse de polymère, **caractérisée en ce qu'**elle correspond au liant tel que défini selon l'une des revendications 1 à 12.

**17.** Procédé de préparation d'une dispersion aqueuse telle que définie selon la revendication 16, **caractérisé en ce qu'**il comprend au moins deux étapes, de préférence deux étapes de polymérisation correspondant respectivement aux phases de polymères P1 et P2 :

i) première étape de polymérisation en émulsion, y compris une étape de semence de polymère, d'une première composition de monomères comprenant en émulsion lesdits monomères M1, M2, M3 et M4 tels que définis dans la revendication 1 et correspondant à la phase de polymère P1, avec ledit monomère M3 étant sous forme majoritairement salifiée et
suivie d'une
ii) deuxième étape de polymérisation en émulsion d'une deuxième composition de monomères comprenant en émulsion lesdits monomères M5, M6, M7 et M8 tels que définis dans la revendication 1 et correspondant à la phase P2 de polymère, de préférence ladite polymérisation étant réalisée dans des conditions de pH inférieur ou égal à 9 et d'au moins 7 ($7 \leq pH \leq 9$) et plus préférentiellement inférieur ou égal à 8 et d'au moins 7 ($7 \leq pH \leq 8$).

**18.** Utilisation d'une dispersion telle que définie selon la revendication 16 ou obtenue par un procédé tel que défini selon la revendication 17, comme liant dans des compositions de revêtements, pour revêtements barrière résistant aux taches et salissures et/ou éventuellement protégeant des substrats métalliques de la corrosion.

**19.** Utilisation selon la revendication 18, **caractérisée en ce que** lesdits revêtements s'appliquent sur substrat choisi parmi : métal, plâtre, ciment, bois y compris aggloméré, verre, carton, papier, céramique ou carrelage.

**20.** Revêtement, en particulier revêtement de peinture, **caractérisé en ce qu'**il est obtenu à partir d'au moins une composition de revêtement telle que définie selon l'une des revendications 1 à 12 ou à partir d'une dispersion aqueuse telle que définie selon la revendication 16 ou d'une dispersion aqueuse obtenue par un procédé tel que défini selon la revendication 17.

**Patentansprüche**

1. Wässrige Beschichtungszusammensetzung, **dadurch gekennzeichnet, dass** sie als Bindemittel eine wässrige Polymerdispersion umfasst, **dadurch gekennzeichnet, dass** die Polymerdispersion eine Mindestfilmbildungstemperatur (MFT) gemäß ISO 2115 zwischen 0 und 50 °C, vorzugsweise zwischen 0 und 40 °C, aufweist und dass sie durch radikalische Emulsionspolymerisation in mindestens zwei Schritten, vorzugsweise in zwei Schritten, erhaltene Polymerteilchen umfasst und dass die Teilchen mindestens zwei Polymerphasen P1 und P2, vorzugsweise zwei, umfassen, wobei das Polymer der Phase P1 75 bis 90 Gew.-% des gesamten Polymers P1 + P2 ausmacht und das Polymer der Phase P2 10 bis 25 Gew.-% des gesamten Polymers P1 + P2 ausmacht, wobei P1 eine gemäß Fox berechnete Glasübergangstemperatur Tg1 im Bereich von 0 bis 40 °C, vorzugsweise von 0 bis 20 °C, aufweist und P2 eine gemäß Fox berechnete Glasübergangstemperatur Tg2 im Bereich von 0 bis 40 °C, vorzugsweise von 0 bis 20 °C, aufweist, die für Tg1 und Tg2 im Bereich von 0 bis 20 °C gleich oder um ± 2 °C verschieden sein können, und wobei

- das Polymer P1 Struktureinheiten umfasst, die sich von den folgenden 4 Monomeren M1 bis M4 ableiten:

- mindestens einem ethylenisch ungesättigten Monomer M1, ausgewählt aus $C_4$-(Meth)acrylsäureestern, vorzugsweise $C_4$-Acrylsäureestern, wobei M1 weiter bevorzugt Butylacrylat ist, und
- mindestens einem ethylenisch ungesättigten Monomer M2, ausgewählt aus vinylaromatischen Monomeren, insbesondere Vinyltoluolen und vorzugsweise Styrol, und
- mindestens einem ethylenisch ungesättigten Monomer M3 mit einer Carbonsäuregruppe und
- mindestens einem Monomer M4 mit einer Funktion als internes Vernetzungsmittel der Phase P1, vorzugsweise ausgewählt aus Monomeren mit mindestens zwei mit den ethylenischen Ungesättigtheiten der Monomere M1 bis M3 copolymerisierbaren ethylenischen Ungesättigtheiten oder mit einer ethylenischen Ungesättigtheit und einer in Alkoxysilan-Form blockierten Silanfunktion,

- das Polymer P2 Struktureinheiten umfasst, die sich von den folgenden 4 Monomeren M5 bis M8 ableiten:

- mindestens einem ethylenisch ungesättigten Monomer M5, ausgewählt aus $C_4$-(Meth)acrylsäureestern, vorzugsweise $C_4$-Acrylsäureestern, die mit M1 identisch oder davon verschieden sein können,
- mindestens einem ethylenisch ungesättigten Monomer M6, ausgewählt aus vinylaromatischen Monomeren, insbesondere Vinyltoluolen und Styrol und vorzugsweise Styrol, wobei das Monomer M6 mit M2 identisch oder davon verschieden sein kann, und
- mindestens einem ethylenisch ungesättigten Monomer M7, dessen Homopolymer eine durch DSC bei 10 °C/min gemessene Tg zwischen 80 und 120 °C und einen durch den Logarithmus des Verteilungskoeffizienten zwischen Octanol und Wasser (LogKow), Estimation Program Interface (EPI) Suite® KowWin von US Environmental Protection Agency's Office of Pollution Prevention and Toxics and Syracuse Research Corporation (SRC) gemäß EPIWEB 4.1 abgeschätzten Hydrophobiewert im Bereich von 1 bis 1,5, wobei das Monomer M7 vorzugsweise Methylmethacrylat ist, und
- mindestens einem ethylenisch ungesättigten Monomer M8 mit einer Acetoacetoxy- oder Amin-oder Ureidofunktion, wobei die Acetoacetoxy-oder Amin- oder Ureidofunktion von der gleichen externen Oberfläche der Schalenpolymerphase P2 getragen wird,

wobei die so aus M5, M6, M7 und M8 erhaltene Polymerphase P2 eine durch den durch Addieren der Produkte der Massenanteile multipliziert mit dem LogKow für jedes Aufbaumonomer, berechneten, auf eine Dezimalstelle gerundeten Hansch-Parameter gekennzeichnete Hydrophobie größer oder gleich 2,0 aufweist und vorzugsweise die Polymerphasen P1 und P2 nacheinander synthetisiert werden und wobei sich P2 in der externen Schicht des Polymerteilchens befindet.

2. Zusammensetzung nach Anspruch 1, **dadurch gekennzeichnet, dass** das Bindemittel frei von jeglichem Monomer mit einer Phosphat-, Phosphin-, Phosphonsäure-, Phosphodiesterfunktion oder fluorierten Funktion, einer stark sauren und anionischen Gruppe, insbesondere einer Sulfonsäuregruppe, ist und dass die Beschichtungszusammensetzung frei von jeglichem Silikonadditiv, fluorhaltigem Additiv und Mikrowachs-Additiv und von jeglichem Zusatz von Polymer- oder Oligomer-Additiven mit einer Tg, die größer ist als die mittlere Fox-Tg von Polymer P1 + P2, ist, ob dieser Zusatz nun in Dispersionsform oder in wasserdispergierbarer Form erfolgt.

3. Zusammensetzung nach Anspruch 1 oder 2, **dadurch gekennzeichnet, dass** das $C_4$-(Meth)acrylsäureester-Monomer M1 aus n-Butylacrylat oder -methacrylat, Isobutylacrylat oder -methacrylat oder tert-Butylacrylat oder -methacrylat, vorzugsweise aus n-Butylacrylat oder -methacrylat, weiter bevorzugt aus n-Butylacrylat, ausgewählt ist.

4. Zusammensetzung nach einem der Ansprüche 1 bis 3, **dadurch gekennzeichnet, dass** das Monomer M3 aus Acrylsäure, Methacrylsäure, Fumarsäure, Itaconsäure und vorzugsweise aus Acrylsäure oder Methacrylsäure ausgewählt ist.

5. Zusammensetzung nach einem der Ansprüche 1 bis 4, **dadurch gekennzeichnet, dass** das Monomer M4 aus multifunktionellen (Meth)acrylsäureestern oder einem (Meth)acrylat mit einer durch Alkoxy blockierten Silangruppe -Si(OR)$_3$, wobei R für Methyl oder Ethyl steht, ausgewählt ist.

6. Zusammensetzung nach einem der Ansprüche 1 bis 5, **dadurch gekennzeichnet, dass** das Monomer M8 für die Acetoacetoxyfunktion aus Acetoacetoxyethyl-(meth)acrylat (AAEM) und für die Aminofunktion aus 2-Dimethylaminoethyl(meth)acrylat (MADAME) und für die Ureidofunktion aus Ureido(meth)acrylaten ausgewählt ist.

7. Zusammensetzung nach einem der Ansprüche 1 bis 6, **dadurch gekennzeichnet, dass** die Beschichtung aus Anstrichmittel, Klarlack oder Tinte, vorzugsweise Anstrichmittel oder Klarlack, ausgewählt ist.

8. Zusammensetzung nach einem der Ansprüche 1 bis 7, **dadurch gekennzeichnet, dass** es sich um eine dekorative Beschichtungszusammensetzung, vorzugsweise eine Anstrichmittel- oder Klarlackzusammensetzung, weiter bevorzugt eine Anstrichmittelzusammensetzung, handelt.

9. Zusammensetzung nach einem der Ansprüche 1 bis 8, **dadurch gekennzeichnet, dass** es sich um eine Barrierebeschichtungszusammensetzung, insbesondere eine gegen Flecken und Anschmutzungen beständige Beschichtungszusammensetzung, insbesondere eine gegen häusliche Flecken und Anschmutzungen beständige Beschichtungszusammensetzung, handelt.

10. Zusammensetzung nach einem der Ansprüche 1 bis 8, **dadurch gekennzeichnet, dass** es sich um eine gegen Korrosion beständige Beschichtungszusammensetzung handelt.

11. Zusammensetzung nach einem der Ansprüche 1 bis 8, **dadurch gekennzeichnet, dass** es sich um eine gegen Flecken und Korrosion beständige Beschichtungszusammensetzung handelt.

12. Zusammensetzung nach einem der Ansprüche 1 bis 11, **dadurch gekennzeichnet, dass** der Hansch-Parameter für das Polymer P1 von dem Hansch-Parameter des Polymers P2 verschieden und mindestens 0,2 Einheiten und vorzugsweise mindestens 0,3 Einheiten höher als dieser ist.

13. Verwendung einer Beschichtungszusammensetzung gemäß einem der Ansprüche 1 bis 12 zum Erhalt von dekorativen Beschichtungen mit Barrierewirkung, insbesondere zum Schutz gegen häusliche Flecken und Anschmutzungen.

14. Verwendung nach Anspruch 13, **dadurch gekennzeichnet, dass** sie auf den Schutz eines Substrats nach dem Beschichten gegenüber Flecken und Anschmutzungen angewendet wird und dass das Substrat aus Wandsubstrat aus Gips oder Zement, Holz, Karton, Tapete, Glas und Metallsubstrat ausgewählt ist.

15. Verwendung einer Beschichtungszusammensetzung gemäß einem der Ansprüche 1 bis 12 für die dekorative Beschichtung auf einem Metallsubstrat, die gegen Korrosion und gegen Flecken oder Anschmutzungen beständig ist.

16. Wässrige Polymerdispersion, **dadurch gekennzeichnet, dass** sie dem Bindemittel gemäß einem der Ansprüche 1 bis 12 entspricht.

17. Verfahren zur Herstellung einer wässrigen Dispersion gemäß Anspruch 16, **dadurch gekennzeichnet, dass** es mindestens zwei, vorzugsweise zwei, Polymerisationsschritte, die jeweils den Polymerphasen P1 und P2 entsprechen, umfasst:

> i) einen einen Polymersaatschritt umfassenden ersten Schritt der Emulsionspolymerisation einer ersten Monomerzusammensetzung, die die Monomere M1, M2, M3 und M4 gemäß Anspruch 1 in Emulsion umfasst und der Polymerphase P1 entspricht, wobei das Monomer M3 in überwiegend versalzter Form vorliegt, und gefolgt von

ii) einem zweiten Schritt der Emulsionspolymerisation einer zweiten Monomerzusammensetzung, die die Monomere M5, M6, M7 und M8 gemäß Anspruch 1 in Emulsion umfasst und der Polymerphase P2 entspricht, wobei die Polymerisation vorzugsweise unter pH-Bedingungen kleiner oder gleich 9 und mindestens 7 ($7 \leq pH \leq 9$) und weiter bevorzugt kleiner oder gleich 8 und mindestens 7 ($7 \leq pH \leq 8$) durchgeführt wird.

18. Verwendung einer Dispersion gemäß Anspruch 16 oder einer durch das Verfahren gemäß Anspruch 17 erhaltenen Dispersion als Bindemittel in Beschichtungszusammensetzungen für Barrierebeschichtungen, die gegenüber Flecken und Anschmutzungen beständig sind und/oder gegebenenfalls Metallsubstrate vor Korrosion schützen.

19. Verwendung nach Anspruch 18, **dadurch gekennzeichnet, dass** die Beschichtungen auf ein Substrat angewendet werden, das aus Metall, Gips, Zement, Holz einschließlich Spanplatten, Karton, Papier, Keramik oder Fliesen ausgewählt ist.

20. Beschichtung, insbesondere Anstrichmittelbeschichtung, **dadurch gekennzeichnet, dass** sie aus mindestens einer Beschichtungszusammensetzung gemäß einem der Ansprüche 1 bis 12 oder aus einer wässrigen Dispersion gemäß Anspruch 16 oder aus einer durch ein Verfahren gemäß Anspruch 17 erhaltenen wässrigen Dispersion erhalten wird.

## Claims

1. Aqueous coating composition, **characterized in that** it comprises, as binder, an aqueous polymer dispersion **characterized in that** said polymer dispersion has a minimum film-forming temperature (MFFT) according to ISO 2115 between 0 and 50°C, preferably between 0 and 40°C and **in that** it comprises polymer particles obtained by radical emulsion polymerization in at least two steps, preferably in two steps and that said particles comprise at least two polymer phases P1 and P2, preferably two, with the P1 polymer phase representing from 75% to 90% by weight of the total polymer P1 + P2 and the P2 polymer phase representing from 10% to 25% by weight of the total polymer P1 + P2, with P1 having a glass transition temperature Tg1 calculated according to Fox, ranging from 0 to 40°C, preferably from 0 to 20°C, and P2 having a glass transition temperature Tg2 calculated according to Fox, ranging from 0 to 40°C, preferably from 0 to 20°C, and for Tg1 and Tg2 ranging from 0 to 20°C, which may be identical or different to within $\pm$ 2°C and with

   - said P1 polymer comprising structural units derived from 4 monomers M1 to M4 as follows:

      - at least one ethylenically unsaturated monomer M1 chosen from $C_4$ (meth)acrylic esters, preferably $C_4$ acrylic esters and more preferentially M1 being butyl acrylate, and
      - at least one ethylenically unsaturated monomer M2 chosen from vinyl aromatic monomers, in particular vinyl toluenes and preferably styrene, and
      - at least one ethylenically unsaturated monomer M3 bearing a carboxylic acid group, and
      - at least one monomer M4 having a function of internal crosslinking agent of said P1 phase, preferably chosen from monomers bearing at least two ethylenic unsaturations that are copolymerizable with the ethylenic unsaturations of the monomers M1 to M3 or bearing an ethylenic unsaturation and a blocked silane functional group in alkoxysilane form,

   - said P2 polymer comprising structural units derived from 4 monomers M5 to M8 as follows:

      - at least one ethylenically unsaturated monomer M5 chosen from $C_4$ (meth)acrylic esters, preferably $C_4$ acrylic esters, which may be identical to or different than M1,
      - at least one ethylenically unsaturated monomer M6 chosen from vinyl aromatic monomers, in particular vinyl toluenes and styrene and preferably styrene, which monomer M6 may be identical to or different than M2, and
      - at least one ethylenically unsaturated monomer M7, the homopolymer of which has a Tg measured by DSC at 10°C/min of between 80 and 120°C and a hydrophobicity value estimated by the logarithm of the partition coefficient between octanol and water (LogKow), Estimation Program Interface Suite® KowWin of the US Environmental Protection Agency's Office of Pollution Prevention and Toxics and Syracuse Research Corporation (SRC) according to EPIWEB 4.1, ranging from 1 to 1.5, said monomer M7 preferably being methyl methacrylate, and

- at least one ethylenically unsaturated monomer M8 bearing an acetoacetoxy or amine or ureido functional group, said acetoacetoxy, amine or ureido functional group being borne by the external surface of the shell polymer phase P2,

the P2 polymer phase thus obtained from M5, M6, M7 and M8 having a hydrophobicity **characterized by** the Hansch parameter rounded up to one decimal place, of less than or equal to 2.0, calculated by adding the products of the mass fractions multiplied by the LogKow corresponding to each component monomer and preferably said P1 and P2 polymer phases being synthesized successively and with P2 being in the external layer of said polymer particle.

2. Composition according to Claim 1, **characterized in that** said binder is free of any monomer bearing a phosphate, phosphine, phosphonic, phosphodiester or fluorinated functional group, strong anionic acid group, in particular sulfonic acid group, and **in that** said coating composition is free of any silicone additive, fluorinated additive or microwax additive and of any addition of polymer or oligomer additives having a Tg greater than the average Fox Tg of polymer P1 + P2, whether this addition is in dispersion form or whether it is in water-dispersible form.

3. Composition according to Claim 1 or 2, **characterized in that** said $C_4$ (meth) acrylic ester monomer M1 is selected from: n-butyl acrylate or methacrylate, isobutyl acrylate or methacrylate or tert-butyl acrylate or methacrylate, preferably from n-butyl acrylate or methacrylate, more preferentially from n-butyl acrylate.

4. Composition according to one of Claims 1 to 3, **characterized in that** said monomer M3 is selected from acrylic acid, methacrylic acid, fumaric acid and itaconic acid and preferably from acrylic acid or methacrylic acid.

5. Composition according to one of Claims 1 to 4, **characterized in that** said monomer M4 is chosen from multifunctional (meth)acrylic esters or a (meth)acrylate bearing an alkoxy-blocked silane group -Si(OR)$_3$, with R being methyl or ethyl.

6. Composition according to one of Claims 1 to 5, **characterized in that** said monomer M8 is selected, for the acetoacetoxy functional group, from acetoacetoxy ethyl (meth)acrylate (AAEM) and, for the amino functional group, from 2-dimethylaminoethyl (meth)acrylate (MADAME) and, for a ureido functional group, from ureido (meth)acrylates.

7. Composition according to one of Claims 1 to 6, **characterized in that** said coating is selected from: paint, varnish or ink, preferably paint or varnish.

8. Composition according to one of Claims 1 to 7, **characterized in that** it is a decorative coating composition, preferably a paint or varnish composition, more preferentially a paint composition.

9. Composition according to one of Claims 1 to 8, **characterized in that** it is a barrier coating composition, in particular a stain-resistant and dirt-resistant coating composition, more particularly a domestic stain-resistant and dirt-resistant coating composition.

10. Composition according to one of Claims 1 to 8, **characterized in that** it is a corrosion-resistant coating composition.

11. Composition according to one of Claims 1 to 8, **characterized in that** it is a stain-resistant and corrosion-resistant coating composition.

12. Composition according to one of Claims 1 to 11, **characterized in that** said Hansch parameter for the P1 polymer is different and higher than the Hansch parameter of the P2 polymer, by at least 0.2 unit and preferably by at least 0.3 unit.

13. Use of a coating composition as defined in one of Claims 1 to 12, for obtaining decorative coatings with a barrier effect, in particular for protection against domestic stains and dirt.

14. Use according to Claim 13, **characterized in that** it applies to the protection of a substrate after coating, with respect to stains and dirt, and **in that** said substrate is chosen from: wall substrate made of plaster or cement, wood, cardboard, wallpaper, glass, metal substrate.

15. Use of a coating composition as defined in one of Claims 1 to 12, for decorative coating on a metal substrate that is resistant to corrosion and to stains or dirt.

**16.** Aqueous polymer dispersion, **characterized in that** it corresponds to the binder as defined in one of Claims 1 to 12.

**17.** Process for preparing an aqueous dispersion as defined in Claim 16, **characterized in that** it comprises at least two steps, preferably two steps, of polymerization corresponding respectively to the P1 and P2 polymer phases:

i) first step of emulsion polymerization, including a step of polymer seeding, of a first composition of monomers comprising in emulsion said monomers M1, M2, M3 and M4 as defined in Claim 1 and corresponding to the P1 polymer phase, with said monomer M3 being in predominantly salified form, and
followed by a
ii) second step of emulsion polymerization of a second composition of monomers comprising in emulsion said monomers M5, M6, M7 and M8 as defined in Claim 1 and corresponding to the P2 polymer phase, said polymerization preferably being carried out under pH conditions of less than or equal to 9 and of at least 7 ($7 \leq pH \leq 9$) and more preferentially less than or equal to 8 and of at least 7 ($7 \leq pH \leq 8$).

**18.** Use of a dispersion as defined in Claim 16 or obtained by means of a process as defined in Claim 17, as binder in coating compositions, for barrier coatings which are resistant to stains and dirt and/or which optionally protect metal substrates against corrosion.

**19.** Use according to Claim 18, **characterized in that** said coatings are applied to a substrate chosen from: metal, plaster, cement, wood including chipboard, glass, cardboard, paper, ceramic or tiling.

**20.** Coating, in particular a paint coating, **characterized in that** it is obtained from at least one coating composition as defined in one of Claims 1 to 12 or from an aqueous dispersion as defined in Claim 16 or from an aqueous dispersion obtained by means of a process as defined in Claim 17.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1832635 A

- WO 2006007052 A

**Littérature non-brevet citée dans la description**

- Polymer Handbook. Interscience Publishers, Juin 1967